(19) Europäisches Patentamt
European Patent Office
Office européen des brevets

(11) **EP 1 442 589 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(21) Anmeldenummer: **02782998.5**

(22) Anmeldetag: **24.10.2002**

(51) Int Cl.:
***H04N 1/40*** (2006.01)

(86) Internationale Anmeldenummer:
**PCT/EP2002/011909**

(87) Internationale Veröffentlichungsnummer:
**WO 2003/036937 (01.05.2003 Gazette 2003/18)**

(54) **VERFAHREN ZUR ERZEUGUNG VON LADUNGSBILDERN VON ZU DRUCKENDEN BILDERN AUF EINEM BEWEGTEN FOTOLEITENDEN ZWISCHENTRÄGER EINES ELEKTROPHOTOGRAFISCHEN DRUCK-ODER KOPIERGERÄTES**

METHOD FOR GENERATING CHARGE IMAGES OF IMAGES TO BE PRINTED ON A MOVING PHOTOCONDUCTIVE INTERMEDIATE SUPPORT OF AN ELECTROGRAPHIC PRINTING OR COPYING DEVICE

PROCEDE POUR LA GENERATION D'IMAGES DE CHARGEMENT D'IMAGES A IMPRIMER SUR UN SUPPORT INTERMEDIAIRE PHOTOCONDUCTEUR EN MOUVEMENT D'UNE IMPRIMANTE OU D'UNE PHOTOCOPIEUSE ELECTROPHOTOGRAPHIQUE

(84) Benannte Vertragsstaaten:
**BE DE FR**

(30) Priorität: **24.10.2001 DE 10152389**

(43) Veröffentlichungstag der Anmeldung:
**04.08.2004 Patentblatt 2004/32**

(73) Patentinhaber: **Océ Printing Systems GmbH
85586 Poing (DE)**

(72) Erfinder: **GROEGER, Hans-Detlef
85586 Poing (DE)**

(74) Vertreter: **Schaumburg, Thoenes, Thurn, Landskron
Patentanwälte
Postfach 86 07 48
81634 München (DE)**

(56) Entgegenhaltungen:
**EP-A- 0 388 833     EP-A- 0 564 868
EP-A- 0 663 760     EP-A- 1 018 834
US-A- 4 661 859     US-B1- 6 280 012**

EP 1 442 589 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Elektrografische Druck- oder Kopiergräte sind bekannt (z.B. EP 0 683 954 B1). Ein solches Druckgerät enthält einen angetriebenen Zwischenträger, z.B. eine Fotoleitertrommel, auf dem Ladungsbilder der zu druckenden Bilder erzeugt werden, die mit Toner eingefärbt werden, anschließend auf einen Aufzeichnungsträger, z.B. Papier, umgedruckt werden und dort fixiert werden. Dazu enthält das Druckgerät gruppiert um den Zwischenträger folgende Komponenten: eine Belichtungseinrichtung (Zeichengenerator), eine Entwicklerstation, eine Umdruckstation, eine Reinigungsstation und eine Ladeeinrichtung. Mit der Ladeeinrichtung wird der Zwischenträger z.B. auf 500 V aufgeladen und dann zur Erzeugung der Ladungsbilder der zu druckenden Bilder mit der Belichtungseinrichtung auf z.B. ca. 70 V entladen. Die Ladungsbilder werden anschließend in der Entwicklerstation auf übliche Weise mit Toner eingefärbt. Der Übergang von Toner auf den Zwischenträger erfolgt aber nur dann, wenn zwischen der Entwicklerstation, z.B. einer Entwicklerwalze, und den entladenen Bereichen des Zwischenträgers eine ausreichende Spannung besteht. Weist z.B. die Entwicklerwalze ein Potential von 220 V auf und die Ladungsbilder auf dem Zwischenträger etwa 70 V, dann ergibt sich ein Feld, das den Toner von der Entwicklerstation auf den Zwischenträger zieht. Das Potential, das durch die Entladung des Zwischenträgers mindestens unterschritten werden muß, um eine Einfärbung des Zwischenträgers zu ermöglichen, wird im folgenden mit Entwicklungsschwelle oder Entwicklungslevel bezeichnet. In der Umdruckstation werden anschließend die Tonerbilder auf den Aufzeichnungsträger übertragen. Schließlich wird in der Reinigungsstation der Zwischenträger von Resttoner gereinigt. Damit kann ein neuer Druckvorgang beginnen.

Aus EP 0 683 954 B1 ist es bekannt, als Belichtungseinrichtung LED's (Licht emittierende Dioden) zu verwenden. Diese werden in der Regel in einem Kamm nebeneinander liegender LED's angeordnet, der quer zur Bewegungsrichtung des Zwischenträgers liegt. Das zu druckende Bild ist in Zeilen und Spalten von Rasterzellen (Makropixel) unterteilt, wobei die Rasterzellen noch in Ausgabepixel (Mikropixel) weiter aufgeteilt sind und jedem Ausgabepixel eine LED zugeordnet ist. Um Rasterzellen mit unterschiedlichen Grauwerten zu erzeugen, können entsprechend einzelne Ausgabepixel der Rasterzelle belichtet werden. Um die Anzahl der Grauwertstufen weiter zu erhöhen, können die LED's im Multilevelbetrieb eingesetzt werden, d.h. es kann die abgegebene Lichtenergie geändert werden durch Variation der Einschaltzeit und/oder des Erregerstroms der LEDs. Eine Realisierung eines derartigen Multilevelbetriebs ist in der oben zitierten EP 0 683 954 B1 beschrieben.

Aus US 4 750 010 ergibt sich eine weitere Anordnung, mit der ein LED - Kamm angesteuert werden kann. Wiederum wird der Grauwert einer Rasterzelle des Druckbildes über die Dauer des Lichtimpulses der der Rasterzelle zugeordneten LED eingestellt.

US 5 255 013 beschreibt schließlich einen LED- Druckkopf, der pro Rasterzelle (Pixel) eine LED aus einem Kamm von LED's vorsieht und bei dem der Grauwert des in Rasterzellen aufgeteilten zu druckenden Bildes pro Rasterzelle durch eine Serie von schnell aufeinander folgenden Lichtimpulsen der zugeordneten LED erzeugt wird.

In EP 1 018 834 A2 ist ein Zeichengenerator mit LED's beschrieben, bei dem die Lichtenergie der einzelnen LED's so eingestellt wird, dass ein gewünschter Punkt (dot) auf einem Zwischenträger und damit auf dem Bedruckstoff erzeugt werden kann. Dabei wird berücksichtigt, dass die Entladekurven benachbart liegender Punkte sich gegenseitig beeinflussen. Die Lichtenergie des den Punkt auf dem Zwischenträger erzeugenden LED wird so eingestellt, dass diese nicht zu groß wird und den Zwischenträger zu stark entlädt. Die Lichtenergie wird dabei durch die Lichtemission pro LED und Zeit festgelegt. Um dieses Verfahren auszuführen, muss somit für jedes LED (und jeden Punkt) die von diesem abzugebenden Lichtenergien gesondert berechnet werden, wozu eine aufwändige Ansteuerung erforderlich ist.

EP 0 564 868 A2 beschreibt einen Zeichengenerator, der mit einem Laser Bilder auf einem Aufzeichnungsträger erzeugt. Unterschiedliche Grauwerte der einzelnen Pixel in Zeilenrichtung werden dadurch erzeugt, dass der Laser mit einem entsprechenden Pulsbreitensignal angesteuert wird. Um eine scharfe Kante bei Übergang am Rand eines Bildes zu erreichen, werden die dem Laser zugeführten Pulsbreitensignale der am Rand liegenden Pixel in Richtung zum nächsten innerhalb des Bildes liegenden Pixel verschoben. Da dem Laser pro Pixel Pulsbreitensignale unterschiedlicher Breite zugeführt werden, gibt der Laser unterschiedliche Lichtenergien pro Pixel ab.

Aus EP 0 663 760 A1 ergibt sich ein LED- Drucker, der eine Steuerarchitektur aufweist, mit der eine Mehrzahl von Graustufen erzeugt werden können. Um eine von den Eigenschaften der einzelnen LED's unabhängige Lichtabgabe bei den LED's zu erreichen, werden die charakeristischen Eigenschaften der einzelnen LED's gemessen, daraus ein Korrektursignal gewonnen, das der Ansteuerschaltung für die LED's zugeführt wird und dort mit dem Ansteuersignal für die LED's verknüpft wird.

EP 0 388 833 A2 offenbart einen weiteren Zeichengenerator mit LED's. Hier wird ebenfalls eine Korrektur der Ansteuersignale für die einzelnen LED's in Abhängigkeit der Umgebungsbedingungen durchgeführt.

US 6 280 012 B1 beschreibt einen Zeichengenerator aus Tintenstrahlköpfen. Um im Fall, dass gleichzeitig eine Vielzahl von Tintenstrahlköpfen gleichzeitig tätig ist, eine Überlastung des Zeichengenerators zu vermeiden, werden die Tintenstrahlköpfe in Gruppen zusammengefasst und versetzt angesteuert.

Aus US 4 661 859 ergibt sich ein Drucker, mit dem Grauwerte gedruckt werden können. Die den Grauwert pro Pixel darstellenden Daten werden einem Zähler zugeführt, der entsprechend dem Wert der Daten hochgezählt wird.

Der Zählerstand wird in ein Pulslängensignal umgesetzt, das zur Ansteuerung eines Lasers verwendet wird.

Das von der Erfindung zu lösende Problem besteht darin, ein weiteres Verfahren anzugeben, mit dem ein Multilevelbetrieb einer Belichtungseinrichtung (eines Zeichengenerators) aus LED's bei einem elektrografischen Druck- oder Kopiergerät ermöglicht wird und dabei ein gleichmäßiges Druckbild erreicht wird.

Das oben geschilderte Problem wird gemäß den Schritten des Patentanspruches 1 gelöst.

Die Einstellung der Grauwertstufen der Rasterzellen wird somit beim erfindungsgemäßen Verfahren dadurch erreicht, daß die Anzahl der Lichtimpulse entsprechend variiert wird, die nacheinander auf den Zwischenträger auftreffen. Wenn die Druckbilder aus jeweils in Zeilen und Spalten angeordneten Rasterzellen aufgebaut werden, ist es vorteilhaft für die Ansteuerung, wenn die von den LED's abgegebenen Lichtimpulse gruppenweise in Spaltenrichtung angeordnet werden und in der Gruppe unmittelbar aufeinander folgen. Dabei können die Lichtimpulse einer Gruppe immer nur in Verbindung mit einer 100 % Belichtung einer Rasterzelle auftreten. Dann ist es ausreichend, wenn pro Rasterzelle einer Zeile von Rasterzellen eine LED vorgesehen wird, die so angesteuert wird, daß sie während einer Zeilenperiode der Rasterzellen in Abhängigkeit des zu erzeugenden Grauwertes eine entsprechende Anzahl von aufeinander folgenden Lichtimpulsen abgibt, wobei ein Grauwert (nicht weiß) erzeugt wird, wenn die durch die Lichtimpulse verursachte Entladung des Zwischenträgers eine Entwicklungsschwelle überquert.

Dabei gilt:

```
Zeilenperiode = 1/Zeilenfrequenz=1/(1[Zeile] ×Druckgeschwin-
digkeit [m/sec]×39,37[inch/m]×Auflösung[Zeilen/inch]).
```

Um den Aufwand klein zu halten, ist es vorteilhaft, die Anzahl der Lichtimpulse pro Zeilenperiode auf acht zu begrenzen. Jedoch ist auch eine größere Anzahl von Lichtimpulsen pro Zeilenperiode möglich.

Mit der erfindungsgemäßen Lösung ergeben sich die folgenden Vorteile:

- Die durch die Lichtimpulse auf dem Zwischenträger verursachte Entladungskurve hat immer die gleiche Flankensteilheit, wobei sich beim Anhängen von weiteren Lichtimpulsen die Flanke der Entladekurve seitlich verschiebt, jedoch keine Einbuchtungen in der Entladekurve auftreten. Die Folge ist, daß das Druckbild gleichmäßig ist und keine Unregelmäßigkeiten wegen unerwünschten Überqueren der Entwicklungsschwelle in entgegengesetzter Richtung aufweist.
- Die Entladungskurve ist unabhängig von der Druckgeschwindigkeit, solange die Länge des Lichtimpulses kleiner als das zugehörige Zeitfenster ist: z.B. $8\times$(Dauer des Lichtimpulses)$\leq$ Zeilenperiode der Rasterzellen unter der Voraussetzung, daß pro Rasterzelle acht Lichtimpulse maximal möglich sind.
- Die Flankensteilheit der Entladungskurve ist unabhängig vom Ansteuerwert der LED's.
- Die Entladungskurve ist unabhängig von der Farbrichtung (weiß $\rightarrow$ schwarz, schwarz $\rightarrow$ weiß).
- Die Entladungskurve ist unabhängig vom Korrekturwert der einzelnen LED.
- Die Entladungskurve ist weitgehend unabhängig von der Form des Leuchtfeldes der LED solange die übertragene Energie pro LED identisch ist.
- Die Entladungskurve ist monoton steigend/fallend zwischen 0 und 100%.
- Es ist keine Verknüpfung von Ansteuerwert für die LED's, der von den zu druckenden Bildern abhängt, und Korrekturwert der LED's, über den die unterschiedlichen Helligkeiten der LED's korrigiert werden, notwendig, daher ist die Ansteuerung vereinfacht. Der Korrekturwert steuert die Länge des Lichtimpulses der zugeordneten LED. Der Ansteuerwert steuert das Ein/Aus der LED.

Weiterbildungen der Erfindung ergeben sich aus den abhängigen Ansprüchen.

Weitere Vorteile des Verfahrens bestehen darin, daß die Energie pro Lichtimpuls gleich gewählt und der auf dem Zwischenträger durch den Lichtimpuls erzeugte Leuchtpunkt größer als die Rasterzelle gewählt werden kann.

Zweckmäßigerweise sind die LED's in einem Kamm nebeneinander angeordnet, jeweils eine LED pro Rasterzelle in Zeilenrichtung. Dabei ist es zur Verringerung des Stromanstieges bei voller Ansteuerung des Kammes zweckmäßig, die LED's versetzt anzusteuern.

Die Erfindung beruht somit auf der Idee, daß ein einzelner kurzer Lichtimpuls einer LED keine sichtbare (durch Toner entwickelbare) Wirkung auf dem Zwischenträger hinterläßt. Die Kombination mehrerer nacheinander auftretender Lichtimpulse erzeugt aber durch ihre Überlagerung genau die Art von Entladungskurven, wie man sie für einen Multilevel-Betrieb braucht. Die Form des Leuchtpunktes ist dabei nicht von Bedeutung, sondern nur die Anordnung, d.h. die Folge von Lichtimpulsen. Die resultierende Entladungskurve wird quasi durch Synthese erzeugt.

Die Erfindung wird anhand der Figuren weiter erläutert. Es zeigen:

3

**Figur 1** eine schematische Darstellung der Komponenten bei einem elektrofotografischen Druck- oder Kopiergerät;
**Figur 2** eine prinzipielle Darstellung des Verfahrens;
**Figur 3** eine Darstellung einer Entladungskurve bei unterschiedlicher Anzahl von Lichtimpulsen;
**Figur 4** ein Beispiel einer Leuchtpunktanordnung für ein Ladungsbild;
**Figur 5** das auf dem Zwischenträger erzeugte Ladungsbild für das Beispiel der Figur 4;
**Figur 6** eine übergeordnete Darstellung einer Ansteuerschaltung der Belichtungseinrichtung;
**Figur 7** ein Blockschaltbild eines Teils der Ansteuerschaltung für die LED's;
**Figur 8** ein Ablaufdiagramm, nach dem die LED's angesteuert werden.

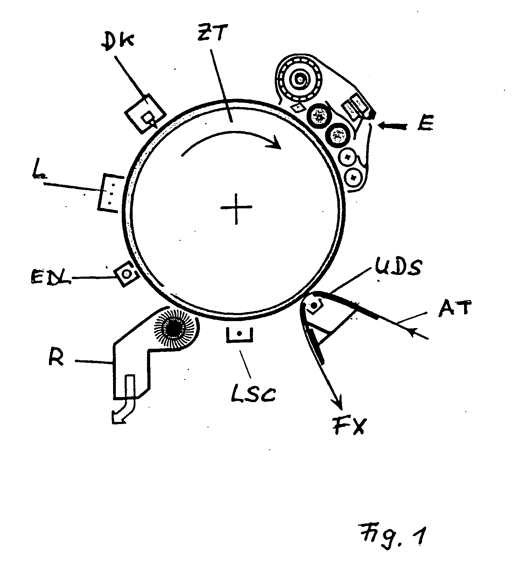

Fig. 1 zeigt in prinzipieller Darstellung den Aufbau eines elktrofotografischen Druck- oder Kopiergerätes entsprechend der EP 0 683 954 B1. Um einen bewegten Zwischenträger ZT, in Fig. 1 eine Fotoleitertrommel, sind folgende Komponenten angeordnet: Ein Ladecorotron L zur Aufladung des Zwischenträgers ZT; ein LED- Zeichengenerator DK, mit dem der Zwischenträger ZT gemäß den zu druckenden Bildern umgeladen wird und entsprechende Ladungsbilder erzeugt werden; eine Entwicklerstation E, in der die Ladungsbilder auf dem Zwischenträger ZT mit Toner eingefärbt werden; eine Umdruckstation UDS, die die Tonerbilder vom Zwischenträger ZT auf einen Aufzeichnungsträger AT, z.B. eine Papierbahn, umdruckt; ein Löschcorotron LSC; eine Reinigungsstation R, mit der Resttoner vom Zwischenträger ZT entfernt wird; eine Entladelampe EDL, mit der der Zwischenträger ZT gleichmäßig belichtet wird. Nicht dargestellt ist, daß der Aufzeichnungsträger AT nach dem Umdruck einer Fixierstation FX zugeführt wird, um die Tonerbilder auf dem Aufzeichnungsträger AT zu fixieren.

In der folgenden Erläuterung wird der von einer LED abgegebene Lichtblitz mit Lichtimpuls LI bezeichnet, der Zeitraum, in der der Lichtimpuls abgegeben wird, mit Leuchtphase LP und der auf dem Zwischenträger auftreffende durch eine bekannte Optik (EP 0683 954 B1) geleitete Lichtimpuls als Leuchtpunkt LE.

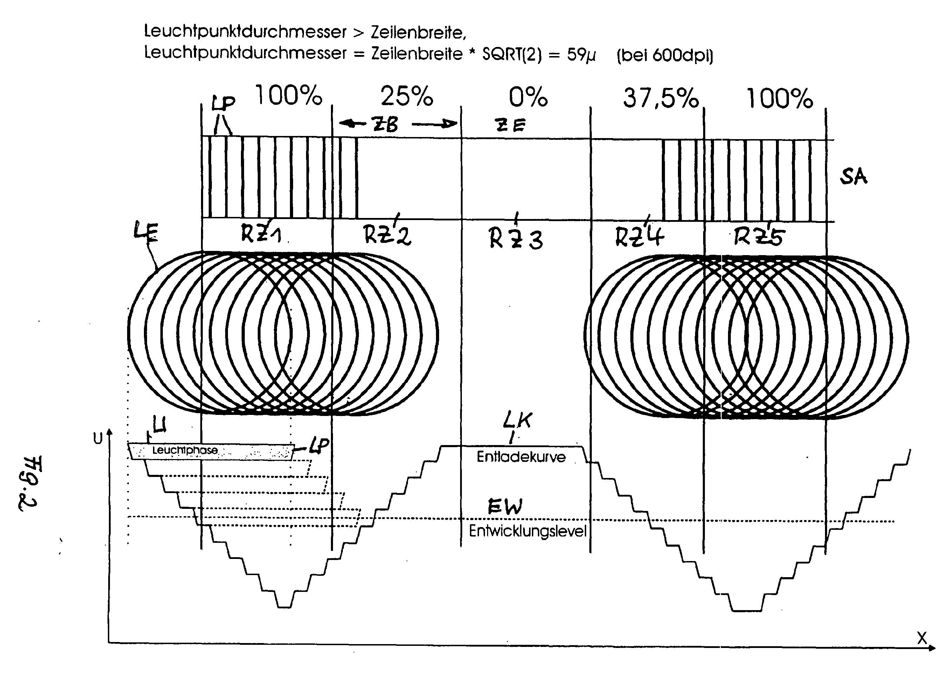

Figur 2 zeigt prinzipiell den Ablauf des Verfahrens.

In der Darstellung wird davon ausgegangen, daß der zu drukkende Bereich in Rasterzellen RZ unterteilt ist, die in Zeilen ZE und Spalten SA angeordnet sind, wobei einer Rasterzelle einer Zeile jeweils ein LED zugeordnet ist. Dabei ist der auf dem Zwischenträger erzeugte Leuchtpunkt LE größer als die Zeilenbreite ZB einer Rasterzelle RZ. Weiter wird davon ausgegangen, daß der Kamm mit den LED's fest angeordnet ist, während der Zwischenträger sich an den LED's vorbei bewegt.

Im oberen Teil der Fig. 2 ist der Bereich (eine Spalte SA in Rasterzellen RZ) der Belichtung eines Zwischenträgers dargestellt, im mittleren Teil der Fig. 2 die Anzahl der dafür erforderlichen Lichtimpulse LI, im unteren Teil der Fig. 2 der Verlauf der Entladungskurve LK (aufgetragen ist der Verlauf der Spannung U bei der Bewegung des Zwischenträgers an den LED's vorbei) auf dem Zwischenträger, die durch die Lichtimpulse LI erzeugt werden.

Im Beispiel wird davon ausgegangen, daß im oberen Teil der Fig. 2 Rasterzellen RZ dargestellt sind, die einer LED zugeordnet sind. Die Rasterzellen RZ sind z.B. in acht Leuchtphasen LP mit gleichem Abstand zerlegt. In der Rasterzelle RZ1 ist der Fall dargestellt, daß eine maximale Belichtung und damit eine Entladung über die gesamte Rasterzelle RZ1 erfolgt; d.h. in allen acht einer Rasterzelle zugeordneten Leuchtphasen LP ist diese belichtet (= 100% Belichtung; Grauwert = schwarz). In der zweiten Rasterzelle RZ2 ist eine Belichtung von 25% (also zwei Leuchtphasen) der Rasterzelle gezeigt. In der dritten Rasterzelle RZ3 ist der Fall dargestellt, daß keine Belichtung erfolgt. Rasterzelle RZ4 zeigt den Fall, daß in ihr eine Belichtung von 37.5% der Rasterzelle (in drei Leuchtphasen) vorliegt und in Rasterzelle RZ5 den Fall, daß wieder die ganze Rasterzelle (in acht Leuchtphasen) belichtet wird. Aus der Darstellung im oberen Teil der Fig. 2 ist entnehmbar, daß eine teilweise Belichtung einer Rasterzelle RZ immer nur mit einer 100% belichteten Rasterzelle RZ auftritt, wobei die teilweise belichteten Rasterzellen direkt vor oder hinter der 100% belichteten Rasterzelle liegen. Auf diese Weise wird die entladene Fläche über eine 100% Rasterzelle hinaus vergrößert und somit der Grauwert der Fläche eingestellt.

Im mittleren Teil der Fig. 2 wird die Anzahl und Lage der von den Lichtimpulsen LI auf dem Zwischenträger erzeugten Leuchtpunkte LE (als Kreis prinzipiell dargestellt) gezeigt, die von der LED erzeugt werden und die größer sind als eine Rasterzelle RZ. Die Anzahl der Lichtimpulse pro Rasterzelle RZ hängt von dem Grauwert ab, der in der Rasterzelle erzeugt werden soll. Nur wenn die Anzahl der unmittelbar aufeinander folgenden Lichtimpulse LI derart ist, daß die durch sie verursachte Entladung des Zwischenträgers die Entwicklungsschwelle EW (Entwicklungslevel in Fig. 1 genannt) des Zwischenträgers überschreitet (unterer Teil der Fig. 2), ist eine ausreichende Entladung des Zwischenträgers gegeben, um eine Einfärbung des Zwischenträgers mit Toner zu ermöglichen.

In der FIG. 2, unterer Teil, sind jeweils die Leuchtphasen LP der Lichtimpulse LI dargestellt. Es ist zu erkennen, daß die Lichtimpulse LI unmittelbar aufeinanderfolgen. Dabei ist der Fall zu Grunde gelegt worden, daß pro Zeilenbreite ZB (Rasterzellenbreite) maximal acht Lichtimpulse abgegeben werden. Jede LED kann in jeder der Leuchtphasen strahlen. Werden alle acht Leuchtphasen genutzt, wird eine 100 % Belichtung erreicht. Die Energie pro Lichtimpuls (z.B. in Mikrojoule) kann für alle LED's identisch sein. Der Abgleich der LED's kann über Strom und/oder Leuchtdauer innerhalb der Leuchtphase erfolgen.

Ein Lichtimpuls einer LED (in einer Leuchtphase) reicht nicht aus, um den Zwischenträger im Beispiel der Fig.

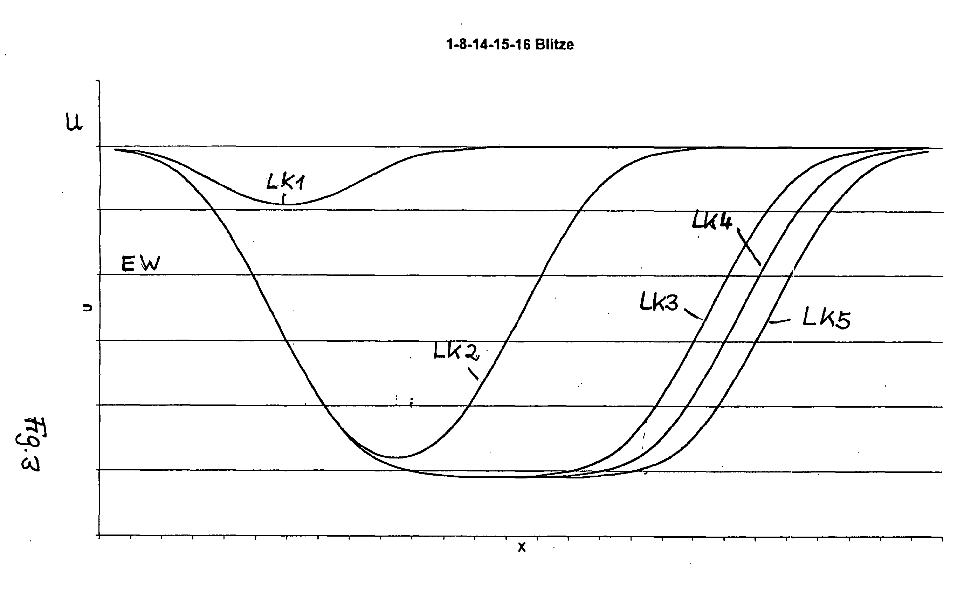

2 bis zur Entwicklungsschwelle EW zu entladen. Erst die Folge von mehreren Lichtimpulsen LI, z.B. von 5 Lichtimpulsen, führt zum Überqueren der Entwicklungsschwelle EW. Um Grauwerte zu drukken, wird somit nicht die Brenndauer einer LED, sondern die Zahl und Lage der Lichtimpulse moduliert. Die Form des einzelnen Lichtimpulses ist nicht mehr von Bedeutung. Da sich mehrere Lichtimpulse LI überlagern können, ergibt sich eine resultierende Entladungskurve, die aus gleichartigen Kurven gebildet wird. Wichtig ist, daß die Form der Entladungskurve in einer Leuchtphase konstant bleibt. Dies kann erreicht werden durch einen kurzen hellen Lichtimpuls LI oder eine schwächere aber längere Belichtung. Die Druckgeschwindigkeit hat keinen Einfluß auf die resultierende Entladungskurve. Diese Verhältnisse zeigt Fig. 3 in prinzipieller Darstellung, die die Entladungskurve LK bei unterschiedlicher Anzahl von Lichtimpulsen LI darstellt (gezeigt ist die Spannung U bei Bewegung des Zwischenträgers in Richtung X). Es ist gezeigt der Verlauf der Entladungskurve LK1 bei einem Lichtimpuls LI, der Entladungskurve LK2 bei acht Lichtimpulsen LI, der Entladungskurve LK3 bei 14 Lichtimpulsen LI, der Entladungskurve LK4 bei 15 Lichtimpulsen LI und der Entladungskurve LK5 bei 16 Lichtimpulsen LI, die jeweils aufeinanderfolgen. Es ist zu erkennen, daß sich bei Auftreffen von zusätzlichen Lichtimpulsen LI auf dem Zwischenträger nur eine Verbreiterung der Entladungskurve ergibt.

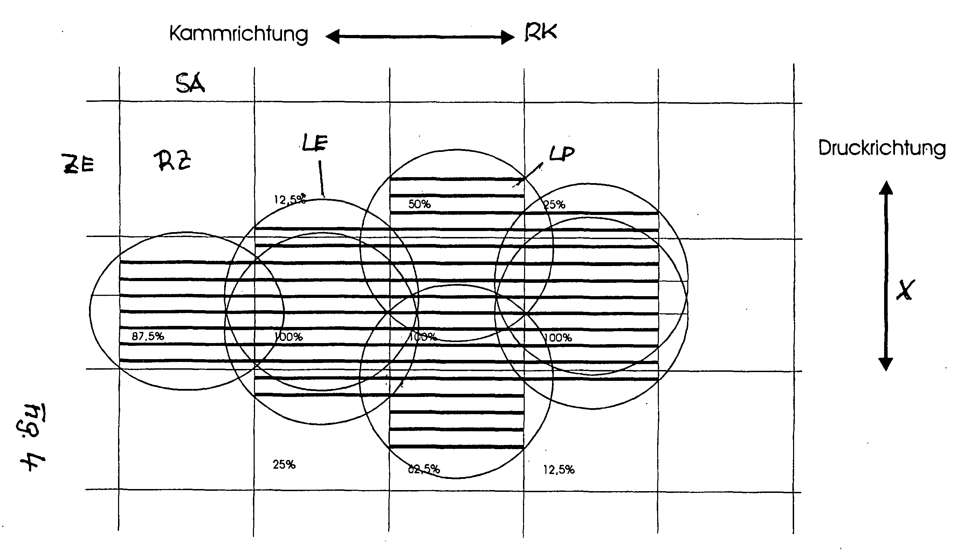

Aus Fig. 4 ergibt sich ein Beispiel der Belichtung bzw. Entladung des Zwischenträgers in prinzipieller Darstellung. Hier ist der zu bedruckende Bereich in in Zeilen ZE und Spalten SA angeordneten Rasterzellen RZ unterteilt. Der Leuchtpunkt LE, den ein Lichtimpuls LI auf dem Zwischenträger erzeugt, ist größer als die Rasterzelle RZ. Weiterhin ist die Richtung RK des LED - Kammes und die Druckrichtung X angegeben. In den Rasterzellen RZ sind die Leuchtphasen LP und damit der Bereich der Belichtung bzw. der Entladung in Prozenten angegeben. Die Lage der Leuchtphasen LP auf dem Zwischenträger ist ebenfalls gezeigt.

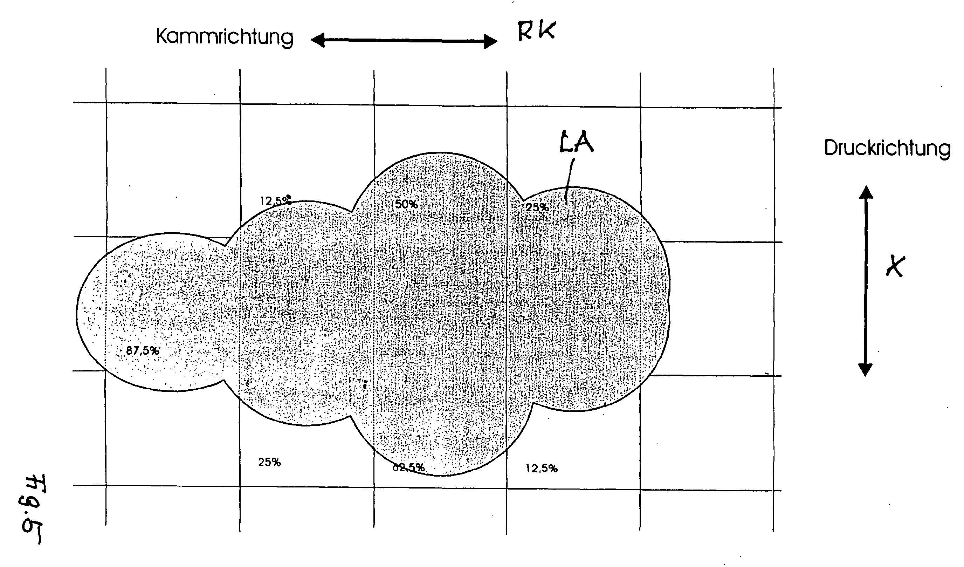

Das sich dabei ergebende Ladungsbild LA auf dem Zwischenträger ist der Fig. 5 zu entnehmen. Die sonstige Darstellung entspricht der Fig. 4.

Unter der Voraussetzung, daß beispielhaft acht Leuchtphasen LP pro Zeilenperiode der Rasterzellen vorgesehen werden, sind 256 Kombinationen der Ansteuerung eines LED möglich. Von diesen 256 Kombinationen der Ansteuerung sind z.B. 16 sinnvoll unter der Voraussetzung, daß die Lichtimpulse immer unmittelbar aufeinander folgen sollen. Dann wird niemals ein einzeln stehender Lichtimpuls LI entwickelt, sondern nur Lichtimpulse in Zusammenhang mit einer 100% Belichtung, wie es sich z.B. aus Fig. 2 ergibt. Zur Ansteuerung der LED's genügen dann Controldaten SD, die codiert von 4 BIT Breite sind. Die Zuordnung der Controldaten SD zu den Leuchtphasen LP der LED, die die Lage der Lichtimpulse LI und deren Auftreten angeben, zeigt die folgende Tabelle.

**Tabelle**

| Controldaten SD | Leuchtphasendaten LPD | | | | | | | |
|---|---|---|---|---|---|---|---|---|
| | LP1 | LP2 | | | | | | LP8 |
| 0 | 0 | 0 | 0 | 0 | 0 | 0 | 0 | 0 |
| 1 | 1 | 0 | 0 | 0 | 0 | 0 | 0 | 0 |
| 2 | 1 | 1 | 0 | 0 | 0 | 0 | 0 | 0 |
| 3 | 1 | 1 | 1 | 0 | 0 | 0 | 0 | 0 |
| 4 | 1 | 1 | 1 | 1 | 0 | 0 | 0 | 0 |
| 5 | 1 | 1 | 1 | 1 | 1 | 0 | 0 | 0 |
| 6 | 1 | 1 | 1 | 1 | 1 | 1 | 0 | 0 |
| 7 | 1 | 1 | 1 | 1 | 1 | 1 | 1 | 0 |
| 8 | 1 | 1 | 1 | 1 | 1 | 1 | 1 | 1 |
| 9 | 0 | 1 | 1 | 1 | 1 | 1 | 1 | 1 |
| 10 | 0 | 0 | 1 | 1 | 1 | 1 | 1 | 1 |
| 11 | 0 | 0 | 0 | 1 | 1 | 1 | 1 | 1 |
| 12 | 0 | 0 | 0 | 0 | 1 | 1 | 1 | 1 |
| 13 | 0 | 0 | 0 | 0 | 0 | 1 | 1 | 1 |
| 14 | 0 | 0 | 0 | 0 | 0 | 0 | 1 | 1 |
| 15 | 0 | 0 | 0 | 0 | 0 | 0 | 0 | 1 |

In der linken Spalte sind die Controldaten SD angegeben, in der rechten Spalte die zugeordnete Leuchtphasendaten LPD, die angeben, ob und an welcher Stelle einer Rasterzelle ein Lichtimpuls erzeugt werden soll. Dabei ist bei den Leuchtphasen LP eine "0" in der Tabelle eingetragen, wenn die LED nicht leuchten soll bzw. eine "1", wenn die LED leuchten soll.

Die Controldaten SD enthalten die zu druckenden Grauwerte und eine Lageinformation. Z.B. gibt das Controldatum SD1 an, daß der Lichtimpuls in der ersten Leuchtphase einer Rasterzelle abgegeben wird, dementsprechend enthält das Leuchtphasendatum LPD1 nur an der ersten Stelle eine "1". Das Controldatum SD8, gibt an, daß in allen Leuchtphasen einer Rasterzelle ein Lichtimpuls erzeugt wird (100% Belichtung). Somit enthalten alle Stellen des zugeordneten Leuchtphasendatums LPD8 eine "1". Aus der Tabelle ist auch erkennbar, daß sich aus den Leuchtphasendaten LPD vor dem Leuchtphasendatum LPD8 und danach ergibt, ob Lichtimpulse LI vor der 100% Belichtung oder danach erzeugt werden. Ein Leuchtphasendatum LPD1 tritt z.B. nur nach einem Leuchtphasendatum LPD8 auf; dagegen tritt ein Leuchtphasendatum LPD9 z.B. nur vor dem Leuchtphasendatum LPD8 auf.

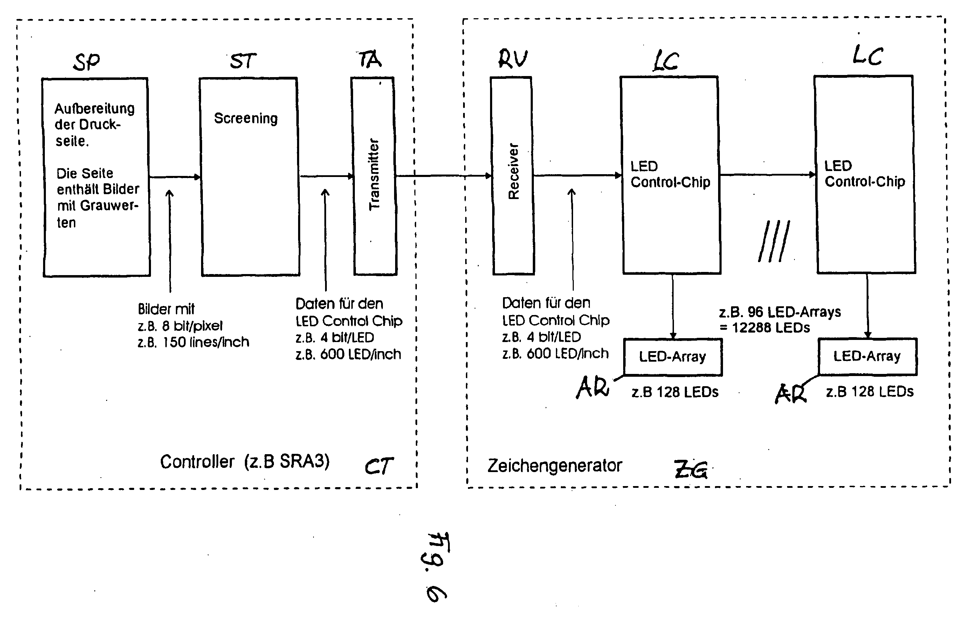

Die Fig. 6 zeigt eine Ansteuerschaltung aus einem Controller CT und einem Zeichengenerator ZG. Der Controller CT weist einen Speicher SP für die Druckdaten von zu druckenden Bildern auf, z.B. mit 8bit/pixel oder 150 lines/inch codiert. Diese Druckdaten werden über eine Screening - Tabelle ST in die Controldaten SD für die einzelnen LED's des Kammes umgesetzt. Die Controldaten SD werden dann von einem Transmitter TA zum Zeichengenerator ZG und zwar zum Receiver RV übertragen. Im Zeichengenerator ZG werden z.B. 12288 LED's in Gruppen AR von z.B. jeweils 128 LED's eingeteilt. Jeder Gruppe AR ist ein LED- Controlchip LC zugeordnet, der die LED's der Gruppe AR von LED's ansteuert.

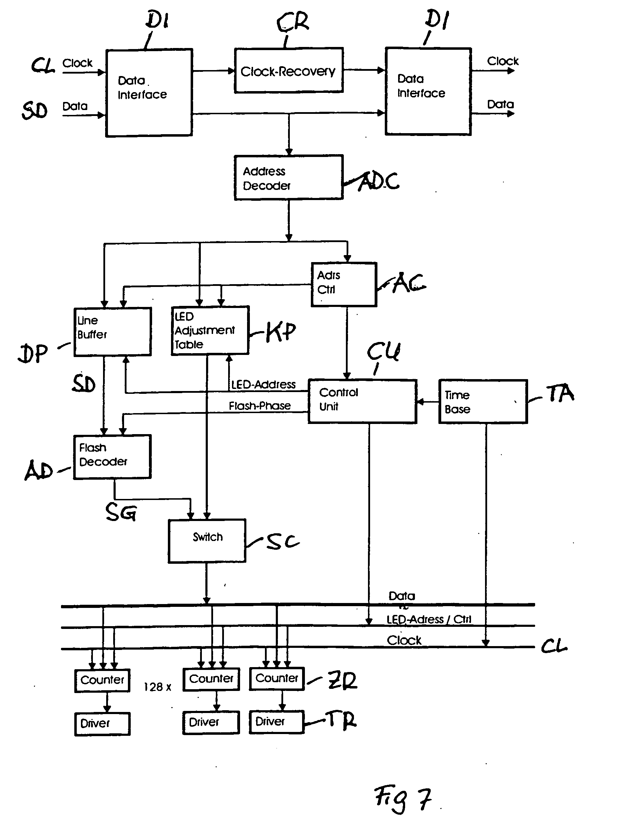

Aus Fig. 7 ergibt sich der Aufbau des Controlchips LC. Die Controldaten SD (DATA genannt) werden getaktet durch einen Clock CL (Takt CL) einem Data Interface (Datenschnittstelle) DI pro Gruppe AR von LED's zugeführt. Die Controldaten werden dann zu den Data Interfaces DI der übrigen Gruppen AR weitergeleitet. Der Clock CL wird in einer Regenerierschaltung CR (Clock Recovery) regeneriert. Die einer Gruppe AR zugeordneten Controldaten werden von einem Adressdecoder ADC ausgewählt. Die Controldaten SD werden in einen Datenpuffer (Line Buffer) DP eingespeichert. Dabei können mehrere Zeilen von Rasterzellen gleichzeitig gespeichert werden, so daß immer die für den Druck erforderliche Zeile im Datenpuffer DP gespeichert ist. In einem Korrekturwertspeicher (LED Adjustment Table) KP sind die Korrekturwerte zum Abgleich der Energiemenge pro Leuchtphase und LED enthalten. Gesteuert durch eine Adreßcontrolschaltung AC werden die Controdaten für die LED der Gruppe AR in den Datenpuffer DP gespeichert und die Korrekturwerte im Korrekturwertspeicher KP adressiert. Eine Steuereinheit (Control Unit) CU steuert den Ablauf der Ansteuerung der LED unter Verwendung eines Taktsignales von der Taktschaltung TA. Die Controldaten SD werden aus dem Datenpuffer DP in eine Zuordnungsschaltung (Flash Decoder) AD übernommen, die die Controldaten SD in Ansteuerwerte SG entsprechend den zugeordneten Leuchtphasendaten LPD (nach der Tabelle) umwandelt. Über einen Schalter SC werden die Ausgänge des Korrekturwertspeichers KP und der Zuordnungsschaltung AD an das adressierte LED über einen Rückwärtzähler ZR angelegt, der die Dauer des Lichtimpulses LI festlegt. Das Zählerausgangssignal wird dann einer Treiberschaltung TR für die LED zugeführt, die die LED betreibt.

Im Betrieb koordiniert die Steuereinheit CU den Ablauf. In Abhängigkeit der Adresse der LED, die einen Lichtimpuls LI abgeben soll, adressiert sie den Datenpuffer DP, veranlaßt die Übertragung des Controldatums SD in die Zuordnungsschaltung AD. Diese wandelt das Controldatum entsprechend dem Leuchtphasendatum LPD in Ansteuerwerte SG um, die dem Schalter SC zugeführt werden. Wenn der Korrekturwert vom Korrekturwertspeicher KP vorliegt, wird durch den Schalter SC ein Signal an den Zähler ZR angelegt, der durch den Takt von der Taktschaltung TA auf null zurück gezählt wird. Vom Beginn des Startens des Zählers ZR an bis zum Erreichen des Wertes null leuchtet die LED. Dabei wird die Dauer des Lichtimpulses durch den Korrekturwert bestimmt, das Auftreten oder Nichtauftreten des Lichtimpulses durch den Ansteuerwert SG.

Die LED's einer Gruppe AR sind über Busse verbunden, ein Bus für die Ansteuerwerte, ein Bus für die Adressen und eine Leitung für den Takt CL.

Der Ablauf des Druckes erfolgt somit auf folgende Weise:

1. Der Druck wird über das Data Interface DI gestartet (Data Interface DI > Adress Decoder ADC > AdrsCtrl AC > ControlUnit CU).
2. Die Steuereinheit (ControlUnit) CU startet Leuchtphase LP1.
3. Die Steuereinheit (ControlUnit) CU holt für LED1 das Controldatum aus dem Datenpuffer DP, prüft in der Zuordnungsschaltung (Flash Decoder) AD, ob in dieser Phase geleuchtet wird und erzeugt den Ansteuerwert SG. Der Schalter SC verknüpft den Wert mit einem Korrekturwert aus dem Korrekturwertspeicher (LED Adjustment Buffer) KP.
4. Die Steuereinheit (Control Unit) CU veranlaßt die Übertragung des Ansteuerwertes über den Datenbus zum Zähler ZR und von dort zu der die LED1 betreibenden Treiberschaltung TR.
5. Die Vorgänge 3, 4 werden für alle LED's der Gruppe AR wiederholt.
6. Die Steuereinheit (Control Unit) CU schaltet zur nächsten Leuchtphase.
7. Die Vorgänge 3, 4, 5, 6 werden für alle Leuchtphasen wiederholt.
8. Warten auf weitere Druckdaten.

Der Aufbau der einzelnen Schaltungsblöcken in den Fig. 5, 6, 8 erfolgt auf übliche Weise.

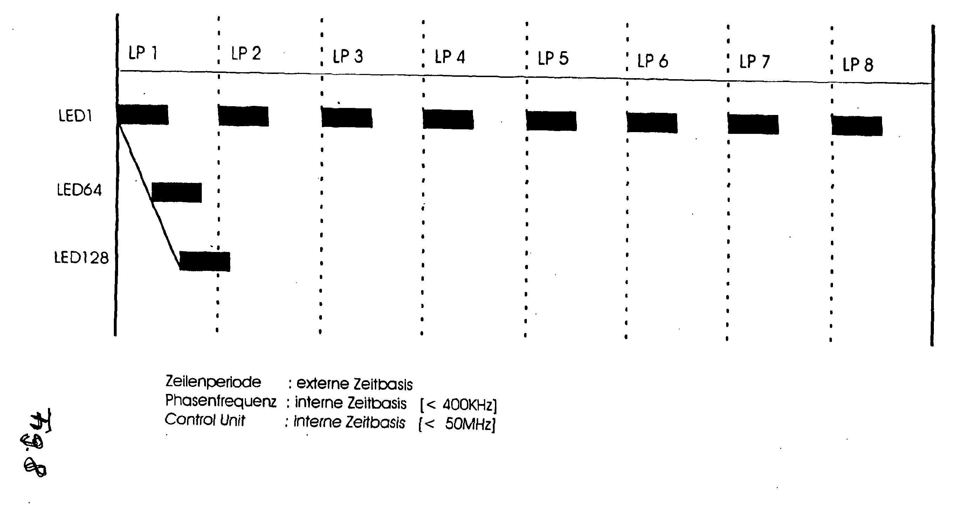

Fig. 8 zeigt ein Zeitdiagramm der Ansteuerung der LED's einer Gruppe AR. Es sind die acht Leuchtphasen LP1 - LP8 für die 128 LED einer Gruppe AR dargestellt. Um den Stromanstieg für die LED's des Kammes klein zu halten, werden in den einzelnen Leuchtphasen LP die LED einer Gruppe AR nacheinander angesteuert und in Abhängigkeit der Druckdaten gezündet oder nicht gezündet. Diese zeitliche Aufeinanderfolge der Ansteuerung der LED einer Gruppe AR erfolgt jeweils in allen acht Leuchtphasen LP1 - LP8. Damit ist gewährleistet, daß in einer Gruppe AR pro Leuchtphase LP höchstens gleichzeitig nur eine LED gezündet ist.

**Bezugszeichenliste**

| | |
|---|---|
| ZT | Zwischenträger, z.B. Fotoleitertrommel |
| L | Ladecorotron |
| DK | LED- Belichtungseinrichtung |
| E | Entwicklerstation |
| UDS | Umdruckstation |
| R | Reinigungsstation |
| LSC | Löschcorotron |
| EDL | Entladelampe |
| FX | Fixierstation |
| LI | Lichtimpuls |
| LP | Leuchtphase |
| LE | Leuchtpunkt |
| RZ | Rasterzelle |
| ZE | Zeile von Rasterzellen |
| SA | Spalte von Rasterzellen |
| X | Bewegungsrichtung des Zwischenträgers |
| EW | Entwicklungsschwelle |
| LK | Entladungskurve |
| RK | Richtung des LED - Kammes |
| SD | Controldaten |
| CT | Steuerschaltung (Controler) |
| SP | Speicher |
| ST | Screening Tabelle |
| TM | Transmitter |
| RV | Receiver |
| ZG | Zeichengenerator |
| AR | Gruppe von LED |
| DP | Datenpuffer (Line Buffer) |
| LC | Controlchip |
| KP | Korrekturwertspeicher (LED Adjustment Table) |
| TA | Taktsteuerung (Time Base) |
| SC | Schalter (Switch) |
| ZR | Zähler (Counter) |
| CU | Steuereinheit (Control Unit) |
| AD | Zuordnungsschaltung (Flash Decoder) |
| SG | Ansteuersignal |
| DI | Data Interface |
| CR | Regenerierschaltung (Clock Recovery) |
| ADC Adress | Decoder |
| AC | Adresscontroler |
| TR | Treiberschaltung (Driver) |

**Patentansprüche**

1. Verfahren zur Erzeugung von Ladungsbildern von zu druckenden Bildern auf einem bewegten fotoleitenden Zwischenträger eines elektrografischen Druck- oder Kopiergerätes unter Verwendung von LED's als Lichtquellen,

- bei dem die Druckbilder aus Zeilen (ZE) und Spalten (SA) von Rasterzellen (RZ) aufgebaut werden und einer Spalte von Rasterzellen jeweils eine LED zugeordnet wird,

- bei dem jede LED so angesteuert wird, daß sie während einer Zeilenperiode in Abhängigkeit des zu erzeugenden Grauwertes in einer Rasterzelle eine Anzahl i (i=1...n, n ganze Zahl) von aufeinander folgenden sich örtlich überlappenden Lichtimpulsen gleicher Energie abgibt, die auf den Zwischenträger gelenkt werden und diesen umladen,

- bei dem die jeweils einer Rasterzelle zugeordneten Lichtimpulse von in Spaltenrichtung aufeinander folgenden Rasterzellen zu Gruppen von unmittelbar aufeinander folgenden Lichtimpulsen zusammengefasst werden.

**2.** Verfahren nach Anspruch 1,
bei dem die Gruppen dadurch gebildet werden, dass die einer Rasterzelle zugeordneten Lichtimpulse, deren Anzahl kleiner ist als die maximale Anzahl n, den einer Rasterzelle zugeordneten Lichtimpulsen, deren Anzahl gleich n ist, unmittelbar vorausgehen oder unmittelbar nachfolgen, je nachdem ob die Rasterzelle vor oder nach der Rasterzelle in Spaltenrichtung liegt, der die maximale Anzahl n von Lichtimpulsen zugeordnet ist.

**3.** Verfahren nach Anspruch 1 oder 2,
bei dem die Lichtimpulse (LI) so auf den Zwischenträger abgebildet werden, daß der auf den Zwischenträger auftreffende Leuchtpunkt (LE) größer ist als die Rasterzelle.

**4.** Verfahren nach Anspruch 1, 2 oder 3,
bei dem die Belichtung der Rasterzellen (RZ) durch die LED's in n Leuchtphasen (LP) eingeteilt werden, die gleich groß sind, wobei pro Leuchtphase nur ein Lichtimpuls pro LED auf den Zwischenträger gelenkt wird.

**5.** Verfahren nach Anspruch 1, 2, 3 oder 4,
bei dem die maximale Anzahl n von Lichtimpulsen während einer Zeilenperiode gleich acht ist.

**6.** Verfahren nach einem der vorhergehenden Ansprüche,
bei dem die Energie pro Lichtimpuls für alle LED identisch ist.

**7.** Verfahren nach einem der vorhergehenden Ansprüche,

- bei dem ein Ladungsbild auf dem Zwischenträger mit Toner eingefärbt wird, wenn das Potential des durch die Lichtimpulse erzeugten Ladungsbildes auf dem Zwischenträger eine Entwicklungsschwelle (EW) überquert,
- bei dem die Entwicklungsschwelle erst erreicht ist, wenn eine Anzahl j (j=1...m, m<n) von Lichtimpulsen auf die Rasterzelle aufgetroffen ist.

**8.** Verfahren nach einem der vorher gehenden Ansprüche,
bei dem die Länge des von den LED's abgegebenen Lichtimpulses (LI) vom Korrekturwert der jeweiligen LED gesteuert wird.

**9.** Verfahren nach Anspruch 8,
bei dem das Einschalten oder nicht Einschalten der LED's von von den zu druckenden Bildern abhängigen Ansteuerwerten (SG) gesteuert wird.

**10.** Verfahren nach einem der vorhergehenden Ansprüche,
bei dem zur Erzeugung von Ladungsbildern auf dem Zwischenträger ein Kamm von nebeneinander liegenden LED's verwendet wird, wobei jeder Rasterzelle einer Zeile eine LED zugeordnet wird.

**11.** Verfahren nach Anspruch 10,
bei dem die LED eines Kammes in Gruppen (AR) von LED's unterteilt werden, die getrennt angesteuert werden.

**12.** Verfahren nach Anspruch 11,
bei dem die LED's einer Gruppe (AR) so angesteuert werden, daß sie je Leuchtphase (LP) ihre Lichtimpulse (LI) nacheinander abgeben.

**13.** Verfahren nach Anspruch 11 oder 12,
bei dem die Gruppe (AR) von LED's 128 LED's aufweist.

**14.** Verfahren nach Anspruch 13,

bei dem die Ansteuerwerte (SG) für die LED's aus 4 bit breiten Controldaten (SD) erzeugt werden, denen über eine Tabelle Leuchtphasendaten (LPD) von n Stellen Breite zugeordnet werden, bei denen jede Stelle angibt, ob die zugeordnete LED einen Lichtimpuls abgibt oder nicht.

**15.** Anordnung eingerichtet zur Durchführung des Verfahrens nach einem der vorhergehenden Ansprüche, bei der eine Steuerschaltung (Controler CT) vorgesehen ist,

- die die Druckdaten der zu druckenden Bilder speichert,
- die die Druckdaten über eine Screening Tabelle (ST) in Controldaten (SD) umwandelt, die die Lage und Anzahl der Lichtimpulse (LI) pro LED angeben,

bei der ein Zeichengenerator (ZG) vorgesehen ist, der ein Controlchip (LC) aufweist, das die Controldaten (SD) in Ansteuerwerte (SG) für die LED's umwandelt, die die Zündung der LED's steuern.

**16.** Anordnung nach Anspruch 15, bei der der Zeichengenerator (ZG) derart ausgebildet ist, daß der Kamm von LED's in Gruppen (AR) von LED's unterteilt ist und jeder Gruppe ein Controlchip (LC) zugeordnet ist, das die der Gruppe zugeordneten Controldaten aus den dem Zeichengenerator (ZG) zugeführten Controldaten auswählt.

**17.** Anordnung nach Anspruch 16, bei der im Controlchip (LC) ein Korrekturwertspeicher (KP) vorgesehen ist, in dem pro LED ein Korrekturwert gespeichert ist, durch den erreicht wird, daß die Helligkeit der LED's gleich ist.

**18.** Anordnung nach Anspruch 16 oder 17, bei der der Control Chip (LC) folgenden weiteren Komponenten aufweist:

- einen Datenpuffer (DP), in dem die Controldaten (SD) von mehreren Zeilen von Rasterzellen gespeichert sind,
- eine Zuordnungsschaltung (AD), die aus den Controldaten (SD) vom Datenpuffer (DP) die zugeordneten Leuchtphasendaten (LPD) und daraus die Ansteuerwerte (SG) für die einzelnen LED erzeugt,
- eine Steuereinheit (CU), die gesteuert durch ein Taktsignal (CL) die Controldaten (SD) aus dem Datenpuffer (DP) in die Zuordnungsschaltung (AD) überleitet und die Abgabe der zugeordneten Korrekturwerte aus dem Korrekturwertspeicher (KP) veranlaßt,
- einen Rückwärtszähler (ZR) pro LED, dessen Ausgangswert durch den Korrekturwert eingestellt wird und der vom Taktsignal zurück gezählt wird, wenn der Ansteuerwert (SG) die Abgabe eines Lichtimpulses angibt.

**Claims**

**1.** A method for generating charge images of images to be printed on a moving photoconductive intermediate support of an electrographic printing or copying device using LEDs as light sources,

- in which the printed images are composed of rows (ZE) and columns (SA) of raster cells (RZ) and each column of raster cells has an LED assigned to it,
- in which each LED is activated in such a way that, during a row period in dependence of the grey level to be generated in a raster cell, it emits a number i (i=1... n, n whole number) of sequential locally overlapping light pulses of equal energy which are directed to the intermediate support and charge-reverse the same,
- in which the light pulses of raster cells succeeding each other in a column direction, which light pulses are assigned to a raster cell, are combined into groups of light pulses directly following one another.

**2.** The method according to claim 1, in which the groups are formed in that the light pulses which are assigned to a raster cell and whose number is less than the maximum number n, either directly precede or directly follow those light pulses assigned to a raster cell whose number is equal to n, depending on whether the raster cell lies before or after the raster cell in column direction, to which the maximum number n of light pulses is assigned.

**3.** The method according to claim 1 or 2, in which the light pulses (LI) are imaged on the intermediate support in such a way that the light spot (LE) impinging on the intermediate support is larger than the raster cell.

**4.** The method according to claim 1, 2 or 3,
in which the exposure of the raster cells (RZ) by the LEDs is divided into n light phases (LP), which are equally large, wherein per light phase only one light pulse per LED is directed to the intermediate support.

**5.** The method according to claim 1, 2, 3 or 4,
in which the maximum number n of light pulses during a row period is equal to eight.

**6.** The method according to one of the preceding claims,
in which the energy per light pulse is identical for all LEDs.

**7.** The method according to one of the preceding claims,

- in which a charge image on the intermediate support is inked with toner when the potential of the charge image generated by the light pulses on the intermediate support crosses a development threshold (EW),
- in which the development threshold is not reached until a number j (j=1...m, m<n) of light pulses impinges on the raster cell.

**8.** The method according to one of the preceding claims,
in which the length of the light pulse (LI) emitted by the LEDs is controlled by the correction value of the respective LED.

**9.** The method according to claim 8,
in which the activation or non-activation of the LEDs is controlled by activation values (SG) dependent on the images to be printed.

**10.** The method according to one of the preceding claims,
in which a comb of adjacent LEDs is used for the generation of charge images on the intermediate support, wherein each raster cell of a row has an LED assigned to it.

**11.** The method according to claim 10,
in which the LED of a comb is divided into groups (AR) of LEDs, which are separately activated.

**12.** The method according to claim 11,
in which the LEDs of a group (AR) are activated in such a way that they emit their light pulses (LI) one after the other per light phase (LP).

**13.** The method according to claim 11 or 12,
in which the group (AR) of LEDs exhibits 128 LEDs.

**14.** The method according to claim 13,
in which the activation values (SG) for the LEDs are generated from 4 bit wide control data (SD), to which are assigned light phase data (LPD) of n places width via a table, in which each place specifies whether the assigned LED emits a light pulse or not.

**15.** An arrangement devised for carrying out the method according to one of the preceding claims,
in which a controller (CT) is provided

- that stores the print data of the images to be printed,
- that converts the print data into control data (SD) via a screening table (ST), which control data specify the location and number of the light pulses (LI) per LED,

in which a character generator (ZG) is provided, which exhibits a control chip (LC), which converts the control data (SD) into activation values (SG) for the LEDs which control the lighting of the LEDs.

**16.** The arrangement according to claim 15,
in which the character generator (ZG) is designed in such a way that the comb of LEDs is divided into groups (AR) of LEDs and a control chip (LC) is assigned to each group, which selects the control data assigned to the group from the control data fed to the character generator (ZG).

**17.** The arrangement according to claim 16,
in which a correction value memory (KP) is provided in the control chip (LC),
in which one correction value is stored per LED, through which it is achieved that the brightness of the LEDs is identical.

**18.** The arrangement according to claim 16 or 17,
in which the control chip (LC) exhibits the following additional components:

a data buffer (DP) in which the control data (SD) of several rows of raster cells are stored,

- an assignment circuit (AD) which generates the assigned light phase data (LPD) from the control data (SD) of the data buffer (DP) and generates the activation values (SG) for the individual LEDs from said light phase data,
- a control unit (CU) which controlled by a clock signal (CL) forwards the control data (SD) from the data buffer (DP) to the flash decoder (AD) and causes the emission of the assigned correction values from the correction value memory (KP),

one down counter (ZR) per LED, whose initial value is set by the correction value and which is counted back by the clock signal, when the activation value (SG) specifies the emission of a light pulse.

**Revendications**

**1.** Procédé de pour la génération d'images de chargement d'images à imprimer sur un support intermédiaire photoconducteur mobile d'une imprimante ou d'une photocopieuse électrophotographique, en utilisant des DEL (diodes électroluminescentes) comme sources lumineuses,

- dans lequel l'image d'impression est constituée de lignes (ZE) et de colonnes (SA) de cellules de trame (RZ), et une DEL est respectivement affectée à chaque colonne de cellules de trame,
- dans lequel chaque DEL est activée de telle sorte que, pendant une période de ligne, elle émet, en fonction de la valeur de gris à produire dans une cellule de trame, un nombre i (i=1...n, n étant un nombre entier) d'impulsions lumineuses successives de même énergie , se chevauchant localement, qui sont dirigées vers le support intermédiaire et le rechargent,
- dans lequel les impulsions lumineuses affectées respectivement à une cellule de trame parmi les cellules de trame successives dans le sens de la colonne, sont rassemblées en groupes d'impulsions lumineuses immédiatement successives.

**2.** Procédé selon la revendication 1,
dans lequel les groupes sont formés de telle façon que les impulsions lumineuses affectées à une cellule de trame, dont le nombre est inférieur au nombre maximum n, précédent immédiatement ou suivent immédiatement les impulsions lumineuses affectées à une cellule de trame dont le nombre est égal à n, selon que la cellule de trame se trouve, dans le sens de la colonne, avant ou après la cellule de trame à laquelle est affecté le nombre maximum n d'impulsions lumineuses.

**3.** Procédé selon la revendication 1 ou 2,
dans lequel les impulsions lumineuses (LI) sont représentées sur le support intermédiaire de telle manière que le point lumineux (LE) projeté sur le support intermédiaire soit plus grand que la cellule de trame.

**4.** Procédé selon la revendication 1, 2 ou 3,
dans lequel l'éclairement des cellules de trame (RZ) par les DEL est divisé en n phases lumineuses (LP) qui sont de même grandeur, moyennant quoi, par phase lumineuse, seule une impulsion lumineuse par DEL est dirigée sur le support intermédiaire.

**5.** Procédé selon la revendication 1, 2, 3 ou 4,
dans lequel le nombre maximum n d'impulsions lumineuses pendant une période de ligne est égal à huit.

**6.** Procédé selon une des revendications précédentes,
dans lequel l'énergie par impulsion lumineuse est identique pour toutes les DEL.

**7.** Procédé selon une des revendications précédentes,

- dans lequel une image de chargement est encrée avec du toner sur le support intermédiaire si le potentiel de l'image de chargement produite par l'impulsion lumineuse franchit un seuil de développement (EW) sur le support intermédiaire,
- dans lequel le seuil de développement n'est atteint que lorsqu'un nombre j (j=1...m, avec m<n) d'impulsions lumineuses est projeté sur la cellule de trame.

**8.** Procédé selon une des revendications précédentes,
dans lequel la longueur de l'impulsion lumineuse (LI) émise par les DEL est commandée par la valeur de correction de chaque DEL.

**9.** Procédé selon la revendication 8,
dans lequel la mise sous tension ou la non mise sous tension des DEL est commandée par des valeurs d'activation (SG) qui sont fonction des images à imprimer.

**10.** Procédé selon une des génération précédentes,
dans lequel on utilise pour la génération d'images de chargement sur le support intermédiaire un peigne de DEL adjacentes, où une DEL est affectée à chaque cellule de trame d'une ligne.

**11.** Procédé selon la revendication 10,
dans lequel les DEL d'un peigne sont subdivisées en groupes (AR) de DEL qui sont activés séparément.

**12.** Procédé selon la revendication 11,
dans lequel les DEL d'un groupe (AR) sont activées de telle sorte qu'elles émettent leur impulsion lumineuse (LI) successivement par phase lumineuse (LP).

**13.** Procédé selon la revendication 11 ou 12,
dans lequel le groupe (AR) de DEL présente 128 DEL.

**14.** Procédé selon la revendication 13,
dans lequel les valeurs d'activation (SG) des DEL sont produites à partir de données de commande d'une largeur de 4 bits auxquelles sont affectées, par l'intermédiaire d'un tableau des données de phase lumineuse (LDP) d'une largeur de n emplacements, chacun des emplacements indiquant si la DEL affectée émet ou non une impulsion lumineuse.

**15.** Dispositif destiné à la mise en oeuvre du procédé selon une des revendications précédentes,
dans lequel est prévu un circuit de commande (Controler CT)

- qui mémorise les données d'impression des images à imprimer,
- qui convertit, par l'intermédiaire d'un tableau de filtrage (ST), les données d'impression en données de commande (SD) qui indiquent la position et le nombre d'impulsions lumineuses (LI) par DEL,
et dans lequel est prévu un générateur de caractères (ZG) comportant une puce de commande (LC) qui convertit les données de commande (SD) en valeurs d'activation (SG) des DEL, lesquelles valeurs commandent l'allumage des DEL.

**16.** Dispositif selon la revendication 15,
dans lequel le générateur de caractères (ZG) est conçu de telle sorte que le peigne de DEL est subdivisé en groupes (AR) de DEL, et qu'à chaque groupe est affectée une puce de commande (LC) qui sélectionne les données de commande affectées au groupe parmi les données de commande fournies au générateur de caractères (ZG).

**17.** Dispositif selon la revendication 16,
dans lequel il est prévu, dans la puce de commande (LC), une mémoire de valeurs de correction (KP)' dans laquelle est mémorisée, pour chaque DEL, une valeur de correction par laquelle on obtient que la luminosité des DEL soit identique.

**18.** Dispositif selon la revendication 16 ou 17,
dans lequel la puce de commande (LC) présente en outre les composants suivants :

- un tampon de données (DP), dans lequel sont mémorisées les données de commande (SD) de plusieurs lignes de cellules de trame,
- un circuit d'affectation (AD), qui génère, à partir des données de commande (SD) du tampon de données (DP), les phases lumineuses (LPD) affectées et à partir de là, les valeurs d'activation (SG) des différentes DEL,
- une unité de commande (CU) qui, commandée par un signal d'horloge (CL), transmet les données de commande (SD) provenant du tampon de données (DP) au circuit d'affectation (AD), et déclenche l'émission des valeurs de correction affectées provenant de la mémoire de valeurs de correction (KP),
- un décompteur (ZR) par DEL, dont la valeur de sortie est ajustée par la valeur de correction, et qui est remis à zéro par le signal d'horloge lorsque la valeur d'activation (SG) indique l'émission d'une impulsion lumineuse.

Fig. 1

Fig.2

1-8-14-15-16 Blitze

Fig.3

Kammrichtung ←——————→ RK

SA

ZE   RZ   LE   LP

Druckrichtung

12,5%   50%   25%

87,5%   100%   100%   100%

25%   62,5%   12,5%

fig. 4

EP 1 442 589 B1

Fig. 5

Fig. 6

*DI* *CR* *DI*

*CL* Clock — Data Interface — Clock-Recovery — Data Interface — Clock

*SD* Data — — Data

Address Decoder *ADC*

Adrs Ctrl *AC*

Line Buffer *DP*

LED Adjustment Table *KP*

*CU*

*SD*

LED-Address

Control Unit *CU* — Time Base *TA*

Flash-Phase

Flash Decoder *AD*

*SG*

Switch *SC*

Data

LED-Adress / Ctrl

Clock *CL*

Counter — 128 x — Counter — Counter *ZR*

Driver — Driver — Driver *TR*

*Fig 7*

20

| LP 1 | LP 2 | LP 3 | LP 4 | LP 5 | LP 6 | LP 7 | LP 8 |

LED1

LED64

LED128

Zeilenperiode    : externe Zeitbasis
Phasenfrequenz : interne Zeitbasis  [< 400KHz]
Control Unit    : interne Zeitbasis  [<  50MHz]

Fig. 8

EP 1 442 589 B1